# EUROPÄISCHE PATENTSCHRIFT

(11) **EP 1 700 254 B1**
(45) Veröffentlichungstag und Bekanntmachung des Hinweises auf die Patenterteilung: **21.04.2010**
(21) Anmeldenummer: 04804048.9
(22) Anmeldetag: 17.12.2004
(51) Int. Cl.: G06K 19/07

(54) **TRAGBARER DATENTRÄGER MIT MITTELN ZUM EINSTELLEN DER LEISTUNGSAUFNAHME**
PORTABLE DATA CARRIER COMPRISING MEANS FOR ADJUSTING THE POWER ACCEPTANCE
SUPPORT DE DONNEES PORTATIF COMPRENANT DES MOYENS POUR REGLER LA PUISSANCE ABSORBEE

(30) Priorität: 22.12.2003 DE 10360346
(43) Veröffentlichungstag der Anmeldung: 13.09.2006
(73) Patentinhaber: Giesecke & Devrient GmbH, 81677 München (DE)
(72) Erfinder: WEIKMANN, Franz, 81675 München (DE)
(74) Vertreter: Klunker . Schmitt-Nilson . Hirsch
(86) Internationale Anmeldenummer: PCT/EP2004/014447
(87) Internationale Veröffentlichungsnummer: WO 2005/062240

(56) Entgegenhaltungen:
- DE-A1- 19 531 275
- PATENT ABSTRACTS OF JAPAN Bd. 2002, Nr. 08, 5. August 2002 (2002-08-05) -& JP 2002 109493 A (DAINIPPON PRINTING CO LTD), 12. April 2002 (2002-04-12)
- PATENT ABSTRACTS OF JAPAN Bd. 2000, Nr. 25, 12. April 2001 (2001-04-12) -& JP 2001 209764 A (SHARP CORP; NIPPON TELEGR & TELEPH CORP <NTT>), 3. August 2001 (2001-08-03)
- PATENT ABSTRACTS OF JAPAN Bd. 2000, Nr. 04, 31. August 2000 (2000-08-31) -& JP 2000 020663 A (NTT DATA CORP), 21. Januar 2000 (2000-01-21)

## Beschreibung

Die Erfindung betrifft einen tragbaren Datenträger gemäß dem Oberbegriff des Anspruchs 1. Weiterhin betrifft die Erfindung ein System bestehend aus wenigstens einem tragbaren Datenträger und wenigstens einem Endgerät sowie ein Verfahren zum Betreiben eines tragbaren Datenträgers.

Tragbare Datenträger, insbesondere Chipkarten, können bei einer Vielzahl unterschiedlicher Anwendungen eingesetzt werden, beispielsweise als Authentifizierungsmodule in Mobilfunkgeräten, als Ausweisdokumente bei Zugangskontrollen, als Träger für eine elektronische Signatur, zur Abwicklung von Transaktionen des Zahlungsverkehrs usw. Die Anwendungen werden jeweils in Zusammenwirkung mit einem Endgerät durchgeführt, das in der Regel auch die Funktion einer Betriebsspannungsquelle für die Chipkarte übernimmt. Dabei ist die elektrische Leistung, die das Endgerät der Chipkarte zur Verfügung stellen kann, jeweils begrenzt. Um sicherzustellen, dass die Chipkarte mit der vom Endgerät abgegebenen elektrischen Leistung ordnungsgemäß betrieben werden kann, wurden für viele Chipkartenanwendungen Standardwerte für die maximale Leistungsaufnahme der Chipkarte festgelegt, die bei der Dimensionierung eines Endgeräts für eine bestimmte Anwendung jeweils zu berücksichtigen sind. Das Endgerät wird für die Anwendung jeweils so dimensioniert, dass es eine elektrische Leistung in Höhe des für diese Anwendung festgelegten Standardwerts abgeben kann. Da die Standardwerte für die maximale Leistungsaufnahme der Chipkarte bei einer Reihe von Anwendungen unterschiedlich sind, sind die für diese Anwendungen vorgesehenen Endgeräte im Hinblick auf ihre Leistungsabgabe entsprechend unterschiedlich dimensioniert. Dies kann insbesondere bei Chipkarten, die für verschiedene Anwendungen vorgesehen sind und infolgedessen bei verschiedenen Endgerätetypen eingesetzt werden, zu Problemen führen. Zwar ist es möglich, diese Chipkarten so auszubilden, dass ihre Leistungsaufnahme auf den Endgerätetyp mit der geringsten Leistungsabgabe abgestimmt ist und dadurch einen reibungslosen Betrieb sicherzustellen. Dies hat allerdings den Nachteil, dass mit einer sinkenden Leistungsaufnahme auch die erzielbare Verarbeitungsgeschwindigkeit der Chipkarte abnimmt und somit die Ausführung der Anwendung eine vergleichsweise lange Zeit in Anspruch nimmt. Bei kontaktlos betriebenen Chipkarten und anderen kontaktlos betriebenen Datenträgern sind bereits Ansätze zur Optimierung des Betriebs im Hinblick auf die verfügbare Energie bzw. zur Verhinderung von Fehlfunktionen durch eine mangelhafte Energieversorgung bekannt.

So offenbart die DE 39 22 556 C2 eine Anordnung zur kontaktlosen Energie- und Sensorsignalübertragung bestehend aus einem HF-Sender und einem Transponder. Der Transponder weist eine Spannungsüberwachungsschaltung auf, die eine Signalaufbereitungsschaltung erst bei Anliegen einer vorgeschriebenen Versorgungsspannung in Funktion setzt.

Aus der WO 99/ 67734 ist ein Verfahren zur bidirektionalen Kommunikation zwischen berührungslos arbeitenden Datenträgern und Endgeräten bekannt. Bei diesem Verfahren wird die Geschwindigkeit der Datenübertragung in Abhängigkeit von der zu überbrückenden Entfernung der Datenübertragung festgelegt. Dabei steuern die Endgeräte ihre Sendeleistung in Abhängigkeit von der Datenübertragungsgeschwindigkeit. Im Ergebnis erfolgt bei einer großen Entfernung eine Datenübertragung mit einer kleinen Geschwindigkeit und einer großen Sendeleistung. Bei einer kleinen Entfernung erfolgt eine Datenübertragung mit einer großen Geschwindigkeit und einer kleinen Sendeleistung. Dadurch soll jeweils die Einhaltung einschlägiger Bestimmungen bezüglich der Frequenzbandbreite und der Sendeleistung sichergestellt werden.

Die DE 100 04 922 A1 offenbart einen Transponder, der in einem äußeren Wechselmagnetfeld betrieben wird. Der Transponder weist einen Taktgeber mit einer Taktfrequenz-Einstelleinrichtung auf, die die Taktfrequenz eines Taktsignals abhängig von der jeweils aktuell am Ort des Transponders vorliegenden Feldstärke des äußeren Magnetfelds einstellt. Weiterhin kann bei hohen Feldstärken eine Ladungspumpe oder ein konventioneller Shunt-Regler zugeschaltet werden.

JP 2002 109493 A geht von dem Problem aus, einen IC-Chip und eine IC-Karte zur Verfügung zu stellen, welche in der Lage sind ihre eigenen Betriebsbedingungen zu verändern und ihre Einstellungen als Reaktion auf Veränderungen in ihren Betriebsbedingungen zu optimieren, wenn die Betriebsgrößen, wie z.B. eine elektrische Versorgung und eine Taktfrequenz, welche von außen erhalten werden können, verändert werden.

Als Lösung wird ein IC-Chip zur Verfügung gestellt, der ein erstes Detektionsmittel zum Detektieren der Taktfrequenz, welche von außen zur Verfügung gestellt wird, und ein zweites Detektionsmittel zum Detektieren eines Spannungswertes, der von außen zur Verfügung gestellt wird, zur Verfügung zu stellen. Unter den Betriebsbedingungen, welche von diesen Mitteln erhalten werden, wird eine IC-Karte offenbart, die einen Hochgeschwindigkeitsverarbeitungsbetrieb unter allen Betriebsbedingungen stabil ausführen kann, indem eine Betriebsbedingungseinstellsektion zum Einstellen von optimalen Betriebsbedingungen zur Verfügung gestellt wird.

JP 2001 209764 A geht von dem Problem aus eine IC-Karte zu realisieren, welche für ein Terminalgerät, wie z.B. ein batteriebetriebenes tragbares Terminal benutzt werden kann, bei welchem der Leistungsverbrauch beschränkt ist.

Als Lösung dieses Problems wird offenbart, daß, wenn die IC-Karte in das Terminalgerät eingeführt wird, eine CPU auf der Basis eines Signales entscheidet, welches von einer Kommunikationsschaltung erhalten wird, welcher Typ eines Terminalgeräts vorliegt, bevor eine erste Reaktion ausgegeben wird, und speichert einen Wert entsprechend den Entscheidungsergebnissen in einem Systemkonfigurationsregister ab. In der Zwischenzeit multipliziert in dem Takterzeugungsabschnitt der IC-Karte eine PLL-Schaltung ein externes Taktsignal und eine Auswahlschaltung und ein Taktgenerator stellen ein internes Taktsignal zur Verfügung, welches einem Vielfachen des Registerwertes der CPU entspricht. Folglich wird die CPU mit einer hohen Geschwindigkeit durch das Signal mit einer hohen Frequenz in einem stationären Terminal betrieben, wo der Leistungsverbrauch nicht beschränkt ist und wird infolge der möglichen Reduzierung des Leistungsverbrauchs in dem batteriebetriebenen tragbaren Terminal bei einer niedrigen Frequenz betrieben.

JP 2000 020663 A geht von dem Problem aus eine kontaktlose IC-Karte zur Verfügung zu stellen, welche bei einer hohen Kommunikationsgeschwindigkeit und einer hohen Verarbeitungsgeschwindigkeit bei einer kurzen Kommunikationsstrecke betrieben wird, wobei sogar bei einem großen Kommunikationsabstand ein minimaler Betrieb garantiert wird.

Als Lösung wird eine Kombination von mehreren IC-Elementen und einem Takt offenbart, die dynamisch durch eine Sende/ Empfangssteuerungsschaltung verändert werden. Das bedeutet, daß elektromagnetische Wellen von einem Sender/ Empfänger empfangen werden und daraus ein Leistungselement, ein Taktelement und ein Datenelement extrahiert werden. Wenn die Befehlsdaten, welche in dem extrahierten Datenelement enthalten sind, ein Befehl zum Verändern des Betriebs um Leistung zu sparen, dann wird nur an eine CPU, ein RAM, ein ROM, ein EEPROM und ein NDP Energie abgegeben und die Taktfrequenz wird um die Hälfte reduziert. Wenn die Befehlsdaten einen Befehl für einen normalen Betrieb angeben, dann wird zu allen IC-Elementen Energie zugeführt und die Taktfrequenz ist am höchsten.

DE 195 31 275 A1 offenbart intelligente Karten für sowohl galvanischen als auch nicht galvanischen Zugriff über Informations- und/ oder Energieversorgungswege, welche sich dadurch auszeichnen, daß die Wahl der jeweiligen Betriebsart über die momentane Situation der jeweiligen Energieversorgung hinaus durch weitere logische Bedingungen beeinflußt werden kann. Dazu werden sogenannte Smart Cards für sowohl galvanischen als auch nicht galvanischen Zugriff mit zusätzlichen Sicherheitsmerkmalen versehen.

Der Erfindung liegt die Aufgabe zugrunde, einen möglichst optimalen Betrieb eines tragbaren Datenträgers sicherzustellen.

Diese Aufgabe wird durch einen tragbaren Datenträger mit der Merkmalskombination des Anspruchs 1 gelöst.

Der erfindungsgemäße Datenträger weist einen integrierten Schaltkreis zur Speicherung und/ oder Verarbeitung von Daten und eine Koppeleinrichtung auf, über die der Datenträger von einem Endgerät mit elektrischer Energie versorgt werden kann und eine Datenübertragung abgewickelt werden kann. Der Datenträger ist für einen Betrieb mit unterschiedlicher Leistungsaufnahme ausgebildet und zeichnet sich dadurch aus, dass er eine Steuereinrichtung und/ oder ein Steuerprogramm zur Einstellung der Leistungsaufnahme in Abhängigkeit von einer Vorgabe auf Basis einer Leistung aufweist, die seitens des Endgeräts zur Versorgung des Datenträgers tatsächlich oder voraussichtlich vorgesehen ist.

Die Erfindung hat den Vorteil, dass jeweils eine leistungsgerechte Anpassung des Datenträgers an die aktuellen Gegebenheiten, insbesondere an das jeweilige Endgerät ermöglicht wird. Dabei ist es besonders verteilhaft, dass der Datenträger mit einer unter den jeweils herrschenden Betriebsbedingungen optimalen Verarbeitungsgeschwindigkeit betrieben werden kann, ohne Gefahr zu laufen, das Endgerät zu überlasten.

Der Datenträger kann für die Ausführung mehrerer Anwendungen ausgebildet sein, wobei für wenigstens einige dieser Anwendungen jeweils ein anwendungsspezifischer Wert für die Leistungsaufnahme des Datenträgers als Vorgabe gespeichert ist. Dies eröffnet die Möglichkeit, die Leistungsaufnahme des Datenträgers jeweils anwendungsspezifisch einzustellen. Um eine Überlastung des Endgeräts in der Anfangsphase zu vermeiden, ist es von Vorteil, wenn ein Startwert für die Leistungsaufnahme des Datenträgers gespeichert ist, der bis zur anderweitigen Festlegung der Leistungsaufnahme als Vorgabe herangezogen wird. Dabei empfiehlt es sich, den Startwert so vorzugeben, dass er dem kleinsten anwendungsspezifischen Wert entspricht.

Beim Datenträger können unterschiedliche Maßnahmen zur Einstellung der Leistungsaufnahme vorgesehen werden. So kann beispielsweise wenigstens eine Komponente vorgesehen sein, die durch die Steuereinrichtung und/ oder durch das Steuerprogramm mit variabler Leistung betreibbar oder wahlweise zuschaltbar ist. Durch ein Zuschalten der Komponente kann die Leistungsaufnahme erhöht und durch ein Abschalten verringert werden. Ebenso ist es auch möglich, den Datenträger so auszubilden, dass die Taktfrequenz, mit der der integrierte Schaltkreis betrieben wird, durch die Steuereinrichtung und/oder durch das Steuerprogramm variierbar ist. Dies hat den Vorteil, dass die Einstellung der Leistungsaufnahme des Datenträgers mit einer sehr feinen Abstufung vorgenommen werden kann und auch dann eine Einstellmöglichkeit verfügbar ist, wenn keine abschaltbaren Komponenten vorhanden sind. Der Datenträger kann insbesondere als Chipkarte ausgebildet sein.

Das erfindungsgemäße System besteht aus wenigstens einem tragbaren Datenträger und wenigstens einem Endgerät. Der Datenträger ist für einen Betrieb mit unterschiedlicher Leistungsaufnahme ausgebildet und weist einen integrierten Schaltkreis zur Speicherung und/ oder Verarbeitung von Daten sowie eine Koppeleinrichtung auf, über die der Datenträger vom Endgerät mit elektrischer Energie versorgt werden kann und eine Datenübertragung abgewickelt werden kann. Das Endgerät ist in der Lage, den Datenträger mit elektrischer Energie zu versorgen und mit dem Datenträger zu kommunizieren. Erfindungsgemäß ist im Endgerät eine Information über dessen maximal zulässige Leistungsabgabe an den Datenträger gespeichert. Der Datenträger weist eine Steuereinrichtung und/ oder ein Steuerprogramm zur Einstellung der Leistungsaufnahme in Abhängigkeit von einer Vorgabe auf Basis der im Endgerät gespeicherten Information auf.

Die Erfindung bezieht sich weiterhin auf ein Verfahren zum Betreiben eines tragbaren Datenträgers, der einen integrierten Schaltkreis zur Speicherung und/oder Verarbeitung von Daten aufweist. Der Datenträger wird von einem Endgerät mit elektrischer Energie versorgt und es wird eine Datenübertragung zwischen dem Endgerät und dem Datenträger durchgeführt. Die Besonderheit des erfindungsgemäßen Verfahrens besteht darin, dass die Leistungsaufnahme des Datenträgers in Abhängigkeit von einer Vorgabe eingestellt wird, die auf Basis einer seitens des Endgeräts zur Versorgung des Datenträgers tatsächlich oder voraussichtlich vorgesehenen Leistung bestimmt wird.

Bis zur anderweitigen Festlegung kann als Vorgabe ein im Datenträger gespeicherter Startwert herangezogen werden, so dass von Anfang an ein sicherer Betrieb des Datenträgers möglich ist. Danach kann die Vorgabe beispielsweise durch die aktuell vom Datenträger ausgeführte Anwendung bestimmt werden. Dies hat den Vorteil, dass der Datenträger zur Ermittlung der Vorgabe keine Informationen vom Endgerät benötigt und diese Vorgehensweise somit keine besonderen Anforderungen an das Endgerät stellt. Ebenso ist es auch möglich, dass die Vorgabe vom Endgerät bestimmt wird. Dadurch lässt sich eine besonders einfache und zuverlässige Abstimmung des Datenträgers auf das Endgerät erreichen. Bei dieser Variante ist es von Vorteil, wenn der Datenträger dem Endgerät mitteilt, dass er seine Leistungsaufnahme variieren kann. Die Mitteilung kann insbesondere im Anschluss an ein Rücksetzen des Datenträgers durch das Endgerät erfolgen. Schließlich besteht noch die Möglichkeit, die Vorgabe abhängig von der aktuell vorliegenden Art der Datenübertragung zwischen dem Datenträger und dem Endgerät zu bestimmen und auf diese Weise den Besonderheiten der gewählten Kopplungsart zwischen Datenträger und Endgerät Rechnung zu tragen. Wenn mehrere Möglichkeiten zur Bestimmung der Vorgabe verfügbar sind, wird einer vom Endgerät bestimmten Vorgabe Vorrang vor allen anderen Vorgaben eingeräumt, da diese die Gegebenheiten bezüglich des Endgeräts am genauesten repräsentiert.

Wenn eine geeignete Vorgabe bestimmt ist, dann besteht im Rahmen des erfindungsgemäßen Verfahrens noch das Erfordernis, die Leistungsaufnahme des Datenträgers abhängig von der Vorgabe einzustellen. In einem bevorzugten Ausführungsbeispiel wird die Einstellung mit Hilfe des Betriebssystems vorgenommen. Wie bereits angedeutet, kann die Einstellung dabei über die Taktfrequenz erfolgen, mit der der Datenträger betrieben wird. Weiterhin kann die Energiezufuhr zu wenigstens einer Komponente des Datenträgers variiert werden, wobei die Komponente insbesondere auch ein- oder ausgeschaltet werden kann.

Die Erfindung wird im folgenden anhand der in der Zeichnung dargestellten Ausführungsbeispiele erläutert. Die Erläuterungen beziehen sich jeweils auf eine Realisierung des erfindungsgemäßen Datenträgers als Chipkarte. Die Erfindung ist aber nicht auf Chipkarten beschränkt, sondern bezieht sich in gleicher Weise auch auf andersartig ausgebildete Datenträger.

Es zeigen
- Fig.1: ein Ausführungsbeispiel für eine Chipkarte in Aufsicht,
- Fig. 2: eine stark vereinfachte Blockdarstellung der Chipkarte aus Fig.1 und eines Endgeräts,
- Fig. 3: ein Flussdiagramm zur Darstellung einer ersten Variante des erfindungsgemäßen Verfahrens und
- Fig. 4: ein Flussdiagramm zur Darstellung einer zweiten Variante des erfindungsgemäßen Verfahrens.

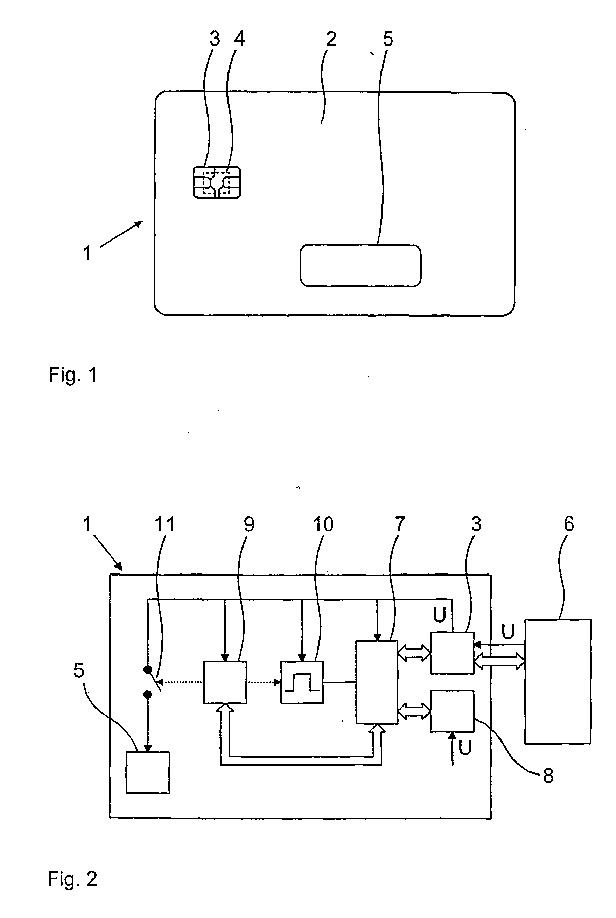

Fig.1 zeigt ein Ausführungsbeispiel für eine Chipkarte 1 in Aufsicht. Die Chipkarte 1 weist einen Kartenkörper 2 auf, der beispielsweise aus einem Kunststoffmaterial besteht. Der Kartenkörper 2 ist mit einer Kontaktfläche 3 versehen und weist in seinem Inneren unterhalb der Kontaktfläche 3 einen Chip 4 auf. Weiterhin ist bei dem dargestellten Ausführungsbeispiel auf dem Kartenkörper 2 eine Anzeigeeinrichtung 5 zur visuellen Darstellung von Daten vorgesehen. Die Kontaktfläche 3 ist mit dem Chip 4 verbunden und dient der berührenden Kontaktierung der Chipkarte 1. Durch diese berührende Kontaktierung wird eine galvanische Verbindung von außen zum Chip 4 hergestellt, über die eine Betriebsspannung an den Chip 4 angelegt werden kann und eine Datenübertragung durchgeführt werden kann. Statt der Kontaktfläche 3 oder zusätzlich zur Kontaktfläche 3 kann die Chipkarte 1 eine nicht figürlich dargestellte Antenne zur Übertragung von elektrischer Energie und von Daten aufweisen.

Fig. 2 zeigt ein stark vereinfachtes Blockschaltbild der Chipkarte 1 aus Fig.1 und eines Endgeräts 6, die zur Ausführung einer Anwendung miteinander in Datenaustausch stehen. Der Aufbau des Endgeräts 6 ist für die Erfindung nicht von Bedeutung, so dass in Fig. 2 diesbezüglich keine Einzelheiten dargestellt sind. Als Komponenten der Chipkarte 1 zeigt Fig. 2 neben der Kontaktfläche 3 und der Anzeigeeinrichtung 5 eine Zentraleinheit 7, einen Speicher 8, eine Leistungssteuerung 9, einen Taktgenerator 10 und eine Schalteinrichtung 11. Diese Komponenten, die jeweils durch einen Funktionsblock oder ein Schaltsymbol repräsentiert werden, sind in der Regel nicht als einzelne Hardware-Komponenten realisiert, sondern es sind jeweils mehrere Komponenten zu einer gemeinsamen Hardware zusammengefasst. So sind die Zentraleinheit 7, der Speicher 8, die Leistungssteuerung 9, der Taktgenerator 10 und die Schalteinrichtung 11 üblicherweise Bestandteile des Chips 4. Außerdem können einige Funktionsblöcke wie beispielsweise die Leistungssteuerung 9 auch in Form einer Software-Routine realisiert sein.

Zwischen dem Endgerät 6 und der Chipkarte 1 besteht eine Datenverbindung, die mittels einer Kontaktierung der Kontaktfläche 3 durch eine Kontaktiereinrichtung des Endgeräts 6 hergestellt wird und durch einen Doppelpfeil zwischen dem Endgerät 6 und der Kontaktfläche 3 dargestellt ist. Im Rahmen der Kontaktierung legt das Endgerät 6 weiterhin eine für den Betrieb der Chipkarte 1 benötigte Betriebsspannung U an die Kontaktfläche 3 an, die von dort an die Komponenten der Chipkarte 1 verteilt wird. Hierbei besteht die Besonderheit, dass der Anzeigeeinrichtung 5 die Betriebsspannung U über die Schalteinrichtung 11 zugeführt wird, d. h. die Betriebsspannung U liegt nur bei durchgeschalteter Schalteinrichtung 11 an der Anzeigeeinrichtung 5 an. Die Datenverbindung zwischen der Kontaktfläche 3 und dem Endgerät 6 ist innerhalb der Chipkarte 1 zur Zentraleinheit 7 weitergeführt. Weitere Datenverbindungen bestehen zwischen der Zentraleinheit 7 und dem Speicher 8 sowie zwischen der Zentraleinheit 7 und der Leistungssteuerung 9. Schließlich ist die Zentraleinheit 7 noch mit dem Taktgenerator 10 verbunden, der ein Taktsignal für die Zentraleinheit 7 und gegebenenfalls auch für weitere Rechenwerke erzeugt, die nicht figürlich dargestellt sind. Der Taktgenerator 10 ist wiederum über eine gestrichelt dargestellte Steuerleitung mit der Leistungssteuerung 9 verbunden, durch die angedeutet wird, dass der Taktgenerator 10 von der Leistungssteuerung 9 gesteuert wird. In analoger Weise wird auch die Schalteinrichtung 11 über eine entsprechende Steuerleitung von der Leistungssteuerung 9 gesteuert. Die Funktionsweise der Chipkarte 1 wird im folgenden näher erläutert.

Die Chipkarte 1 ist als eine Multifunktionskarte ausgebildet, d. h. sie ist in der Lage, mehrere verschiedene Anwendungen auszuführen. Dies hat zur Folge, dass die Chipkarte 1 bei unterschiedlichen Typen von Endgeräten 6 eingesetzt wird, die jeweils für die verschiedenen Anwendungen vorgesehen sind. Da für die einzelnen Anwendungen verschiedene Standardwerte für die maximale Leistungsaufnahme der Chipkarte 1 definiert sein können, besteht die Möglichkeit, dass sich die für die einzelnen Anwendungen vorgehaltenen Endgeräte 6 unter anderem bezüglich der elektrischen Leistung unterscheiden, die sie für den Betrieb der Chipkarte 1 bereitstellen. So wird beispielsweise für eine Anwendung, bei der die Chipkarte 1 nur eine geringe Zahl von einfachen Operationen durchführt, in der Regel ein kleinerer Standardwert für die maximale Leistungsaufnahme der Chipkarte 1 definiert als für eine Anwendung mit vielen aufwendigen Operationen, die eine leistungsfähige Chipkarte 1 mit einer entsprechend hohen Stromaufnahme voraussetzt. Verwendet man dieselbe Chipkarte 1 bei beiden Anwendungen und somit bei Endgeräten 6, die sich bezüglich der für die Chipkarte 1 bereitgestellten elektrischen Leistung unterscheiden, so stellt sich die Frage, für welche Leistungsaufnahme die Chipkarte 1 ausgelegt werden soll. Ist die Leistungsaufnahme der Chipkarte 1 größer als die Leistungsabgabe, für die das Endgerät 6 ausgelegt ist, so kann dies zu Betriebsstörungen oder gar zu einer Schädigung des Endgeräts 6 führen. Nutzt die Chipkarte 1 hingegen die vom Endgerät 6 bereitgestellte elektrische Leistung nur zum Teil aus, so wird die maximal mögliche Ausführungsgeschwindigkeit der Anwendung nicht erreicht. Dies ist darin begründet, dass für eine hohe Ausführungsgeschwindigkeit eine hohe Taktfrequenz benötigt wird, die wiederum eine hohe Leistungsaufnahme der Chipkarte 1 zur Folge hat. Diese Problematik wird erfindungsgemäß mit Hilfe der Leistungssteuerung 9 gelöst, die den Taktgenerator 10 so ansteuert, dass bei einem Endgerät 6 mit einer niedrigen Leistungsabgabe eine vergleichsweise niedrige Taktfrequenz erzeugt wird und bei einem Endgerät 6 mit einer hohen Leistungsabgabe eine vergleichsweise hohe Taktfrequenz. Statt einer direkten Einwirkung auf den Taktgenerator 10 besteht auch die Möglichkeit, Teiler- oder Multiplikatoreinrichtungen für das Taktsignal zu beeinflussen. Dies bietet sich insbesondere bei Ausführungsbeispielen an, bei denen kein eigener Taktgenerator 10 auf der Chipkarte 1 vorgesehen ist, sondern das Taktsignal vom Endgerät 6 in die Chipkarte 1 eingespeist wird. Mit der geschilderten Beeinflussung des Taktsignals kann jeweils die höchstmögliche Ausführungsgeschwindigkeit erreicht werden, ohne das Risiko einer Überlastung des Endgeräts 6 einzugehen. Dabei bestehen unterschiedliche Möglichkeiten für die konkrete Arbeitsweise der Leistungssteuerung 9.

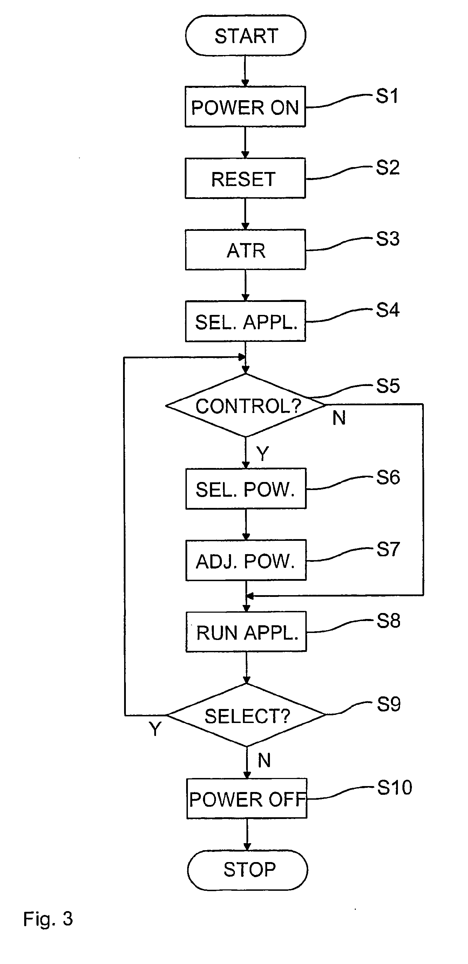

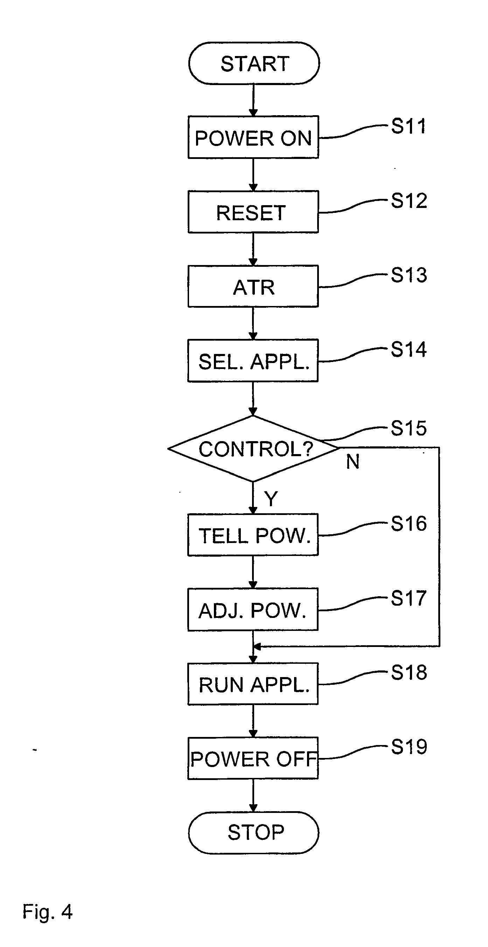

Die Ansteuerung des Taktgenerators 10 kann beispielsweise von der aktuell ausgeführten Anwendung abhängig gemacht werden. Diese Vorgehensweise beruht darauf, dass die Standardwerte für die maximale Leistungsaufnahme der Chipkarten 1 üblicherweise anwendungsspezifisch definiert sind und die jeweils für die Anwendung vorgehaltenen Endgeräte 6 entsprechend den zugehörigen Standardwerten dimensioniert sind. Einzelheiten zu dieser Art der Ansteuerung sind in Fig. 3 dargestellt. Ebenso ist es auch möglich, dass das Endgerät 6 der Chipkarte 1 Daten bezüglich seiner Leistungsabgabe übermittelt und die Leistungssteuerung 9 den Taktgenerator 10 auf Basis dieser Daten ansteuert. Dies ist in Fig. 4 im einzelnen dargestellt. In beiden Fällen besteht zudem die Möglichkeit, dass die Leistungssteuerung 9 nicht nur auf den Taktgenerator 10, sondern auch auf die Schalteinrichtung 11 einwirkt. Weiterhin kann die Einwirkung auf die Schalteinrichtung 11 auch alternativ zur Einwirkung auf den Taktgenerator 10 vorgesehen sein. Bei dem in Fig. 2 dargestellten Ausführungsbeispiel besteht der Effekt der Einwirkung auf die Schalteinrichtung 11 darin, dass die Spannungsversorgung der Anzeigeeinrichtung 5 unterbrochen und auf diese Weise die Leistungsaufnahme der Chipkarte 1 beeinflusst werden kann. Alternativ oder zusätzlich zur Anzeigeeinrichtung 5 können auch andere Komponenten der Chipkarte 1 wahlweise abgeschaltet werden, wie z. B. Sensoren oder Bus-Controller. Dabei ist sowohl eine gemeinsame als auch eine getrennte oder gestaffelte Abschaltung denkbar. Ebenso besteht auch die Möglichkeit, die Schalteinrichtung 11 durch eine Einrichtung zu ersetzen, mit der sich die Energiezufuhr zu einer Komponente der Chipkarte 1 variieren lässt.

Fig. 3 zeigt ein Flussdiagramm zur Darstellung einer ersten Variante des erfindungsgemäßen Verfahrens. Bei dieser Variante wird die Leistungsaufnahme der Chipkarte 1 abhängig von der aktuell ausgeführten Anwendung gesteuert. Der Durchlauf des Flussdiagramms beginnt mit einem Schritt S1, in dem die Energiezufuhr zur Chipkarte 1 gestartet wird, d. h. mit Anlegen der Betriebsspannung U. Dies kann beispielsweise dadurch geschehen, dass die Chipkarte 1 in das Endgerät 6 eingeführt wird und von einer Kontaktiereinrichtung berührend kontaktiert wird. Ebenso ist es auch möglich, dass die Chipkarte 1 in den Wirkungsbereich eines magnetischen oder elektromagnetischen Felds gebracht wird, das von einem kontaktlosen Endgerät 6 erzeugt wird. Als Reaktion auf das Anlegen der Betriebsspannung U oder auf einen danach erfolgten Empfang eines RESET-Kommandos vom Endgerät 6, wird die Chipkarte 1 in einem Schritt S2 zurückgesetzt und nimmt dadurch einen definierten Betriebszustand ein.

An Schritt S2 schließt sich ein Schritt S3 an, in dem vom Betriebssystem der Chipkarte 1 ein Startwert für die Leistungsaufnahme vorgegeben wird. Weiterhin sendet die Chipkarte 1 im Schritt S3 eine als ANSWER TO RESET, kurz ATR, bezeichnete Datenfolge an das Endgerät 6, die eine Reihe von Informationen über die Chipkarte 1 und die implementierten Anwendungen enthält. Der Startwert für die Leistungsaufnahme kann beispielsweise im Speicher 8 der Chipkarte 1 abgelegt sein. Außerdem kann für jede Anwendung, für die die Chipkarte 1 eingesetzt werden kann, ein anwendungsspezifischer Standardwert für die Leistungsaufnahme im Speicher 8 abgelegt sein. Dabei entspricht der vom Betriebssystem vorgegebene Startwert in der Regel dem kleinsten anwendungsspezifischen Standardwert, der im Speicher 8 abgelegt ist. Wird eine neue Anwendung nachgeladen, so wird auch für die neue Anwendung ein anwendungsspezifischer Standardwert für die Leistungsaufnahme im Speicher 8 abgelegt und gegebenenfalls der vom Betriebssystem gespeicherte Startwert entsprechend reduziert. Der vom Betriebssystem vorgegebene Startwert kann davon abhängig gemacht werden, ob die Chipkarte 1 berührend von dem Endgerät 6 kontaktiert wird oder ob ein kontaktloser Übertragungsweg aufgebaut wird. Als Entscheidungskriterium kann dabei herangezogen werden, auf welche Weise die Betriebsspannung U an die Chipkarte 1 angelegt wird.

Auf Schritt S3 folgt ein Schritt S4, in dem das Endgerät 6 eine Anwendung auswählt. In einem sich anschließenden Schritt S5 wird geprüft, ob die Chipkarte 1 in der Lage ist, eine Anpassung der Leistungsaufnahme durchzuführen. Der Schritt S5 ist insbesondere deshalb vorgesehen, um eine Abwärtskompatibilität mit Chipkarten 1 herzustellen, die nicht über die Möglichkeit der Anpassung der Leistungsaufnahme verfügen und kann somit auch entfallen. Wird im Schritt S5 festgestellt, dass die Möglichkeit der Anpassung der Leistungsaufnahme bei der Chipkarte 1 gegeben ist, so schließt sich ein Schritt S6 an, in dem das Betriebssystem den Standardwert für die Leistungsaufnahme der im Schritt S4 ausgewählten Anwendung übernimmt. Auf Schritt S6 folgt ein Schritt S7 zur Einstellung der Leistungsaufnahme der Chipkarte 1 gemäß der Vorgabe durch das Betriebssystem. Wie bereits an Hand von Fig. 2 erläutert, kann die Einstellung der Leistungsaufnahme über die Taktfrequenz und/ oder durch Variieren der elektrischen Energie erfolgen, die den Komponenten der Chipkarte 1 zur Verfügung gestellt wird. Wenn die entsprechenden Einstellungen vorgenommen sind, wird mit einem Schritt S8 fortgefahren, in dem die ausgewählte Anwendung ausgeführt wird. Zu Schritt S8 gelangt man auch, wenn die Abfrage des Schrittes S5 negativ ausfällt, d. h. wenn keine Möglichkeit für eine Anpassung der Leistungsaufnahme der Chipkarte 1 vorgesehen ist und somit die Schritte S6 und S7 übersprungen werden. An Schritt S8 schließt sich ein Schritt S9 an, in dem abgefragt wird, ob eine weitere Anwendung ausgewählt wird. Falls dies der Fall ist, wird mit Schritt S5 fortgefahren. Andernfalls folgt auf Schritt S9 ein Schritt S10, in dem das Endgerät 6 die Energiezufuhr zur Chipkarte 1 unterbricht. Damit ist der Durchlauf des Flussdiagramms beendet.

Fig. 4 zeigt ein Flussdiagramm zur Darstellung einer zweiten Variante des erfindungsgemäßen Verfahrens. Bei dieser Variante wird die Leistungsaufnahme der Chipkarte 1 abhängig von einer Vorgabe durch das Endgerät 6 eingestellt. Der Durchlauf des Flussdiagramms beginnt mit einem Schritt S11, in dem analog zum Schritt S1 der Fig. 3 die Energiezufuhr zur Chipkarte 1 gestartet wird. Im darauffolgenden Schritt S12 wird die Chipkarte 1 entsprechend Schritt S2 der Fig. 3 zurückgesetzt. An Schritt S12 schließt sich ein Schritt S13 an, in dem vom Betriebssystem der Chipkarte 1 ein Startwert für die Leistungsaufnahme eingestellt wird und ein ANSWER TO RESET an das Endgerät 6 übermittelt wird. Dabei weist der Schritt S13 gegenüber dem Schritt S3 der Fig. 3 die Besonderheit auf, dass dem Endgerät 6 im Rahmen des ANSWER TO RESET mitgeteilt wird, dass die Chipkarte 1 über die Möglichkeit der Anpassung der Leistungsaufnahme verfügt. Nach Schritt S13 wird ein Schritt S14 ausgeführt, in dem das Endgerät 6 die im ANSWER TO RESET übermittelten Daten auswertet. Dabei kann auch eine Auswahl einer Anwendung analog zu Schritt S4 der Fig. 3 durchgeführt werden. Anschließend an Schritt S14 wird ein Schritt S15 ausgeführt, in dem abgefragt wird, ob die Chipkarte 1 über die Möglichkeit der Anpassung der Leistungsaufnahme verfügt. Diese Abfrage kann an Hand der Daten beantwortet werden, die im ANSWER TO RESET von der Chipkarte 1 an das Endgerät 6 übermittelt wurden. Stellt sich heraus, dass die Chipkarte 1 über die Möglichkeit zur Anpassung der Leistungsaufnahme verfügt, so schließt sich an Schritt S15 ein Schritt S16 an, in dem das Endgerät 6 der Chipkarte 1 einen Wert für seine maximale Leistungsabgabe mitteilt. In einem darauffolgenden Schritt S17 übernimmt die Chipkarte 1 diesen Wert und führt entsprechende Einstellungen durch, um die verfügbare Leistung möglichst vollständig zu nutzen. Je nach dem bislang eingestellten Wert wird die Leistungsaufnahme der Chipkarte 1 hierzu erhöht oder erniedrigt. Anschließend wird ein Schritt S18 ausgeführt, in dem die Anwendung abgearbeitet wird. Zu Schritt S18 gelangt man auch, wenn im Schritt S15 festgestellt wird, dass die Chipkarte 1 nicht über eine Möglichkeit zur Anpassung der Leistungsaufnahme verfügt. An Schritt S18 schließt sich ein Schritt S19 an, in dem die Energiezufuhr zur Chipkarte 1 eingestellt wird. Damit ist der Durchlauf des Flussdiagramms beendet.

Prinzipiell ist auch eine Kombination der in den Fig. 3 und 4 dargestellten Vorgehensweisen denkbar, d. h. dass die Chipkarte 1 sowohl an Hand der aktuell ausgewählten Anwendung als auch an Hand einer Vorgabe des Endgeräts 6 eine Anpassung der Leistungsaufnahme durchführt. In diesem Fall wird das Entscheidungsmuster, demgemäß die Anpassung der Leistungsaufnahme durchgeführt wird, hierarchisch gestaltet, wobei der Anpassung der Leistungsaufnahme an Hand einer Vorgabe durch das Endgerät 6 Vorrang eingeräumt wird. Dies führt dazu, dass immer dann, wenn das Endgerät 6 einen Wert für die maximale Leistungsabgabe an die Chipkarte 1 übermittelt, dieser Wert als Obergrenze bei der Anpassung der Leistungsaufnahme der Chipkarte 1 berücksichtigt wird.

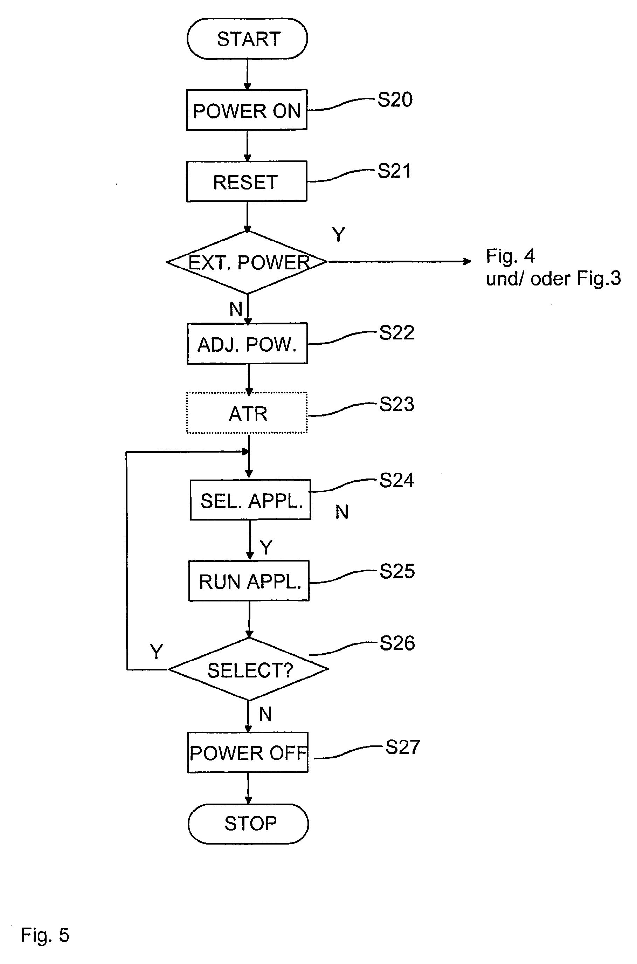

Die Fig. 5 zeigt ein Flußdiagramm einer weiteren erfindungsgemäßen Ausführungsform. Hier weist der Datenträger eine interne Energieversorgung, wie z.B. Akku, Batterie, Solarzellen etc. auf. Das Betriebssystem bzw. eine Logikschaltung paßt den Leistungsverbrauch des Datenträgers der Energiequelle an. Das Flußdiagramm beginnt, wie schon in den vorangegangenen Fig. ausführlich beschrieben, mit den Schritten S20 bzw. S21, mit denen die Energiezufuhr gestartet und der Datenträger zurückgesetzt wird. Es schließt sich eine Abfrage nach einer externen Energieversorgung an. Wird dies bejaht, so wird analog Fig. 3 bzw. Fig. 4 weiterverfahren. Im Fall einer internen Energieversorgung wird anschließend - Schritt 22 - die Leistungsaufnahme begrenzt. Ist ein externer Datenaustausch erforderlich, so schließt sich Schritt S23 an, mit dem die Chipkarte 1 ein ANSWER TO RESET an das Endgerät 6 schickt. Im folgenden Schritt S24 wählt das Endgerät 6 eine Anwendung aus, die danach - Schritt S25 - ausgeführt wird. In Schritt S26 besteht die Möglichkeit, eine weitere Anwendung auszuwählen, wodurch Schritt S24 und S25 ein weiteres Mal durchlaufen werden. Wird keine weitere Anwendung gewünscht, schließt sich wiederum Schritt S27 an, bei dem die Energiezufuhr gestoppt wird.

## Patentansprüche

1. Tragbarer Datenträger mit einem integrierten Schaltkreis (4) zur Speicherung und/oder Verarbeitung von Daten und einer Koppeleinrichtung (3), über die der Datenträger von einem Endgerät (6) mit elektrischer Energie versorgt werden kann und eine Datenübertragung abgewickelt werden kann, wobei der Datenträger (1) für einen Betrieb mit unterschiedlicher Leistungsaufnahme ausgebildet ist und der Datenträger (1) eine Steuereinrichtung (9) und/oder ein Steuerprogramm zur Einstellung der Leistungsaufnahme in Abhängigkeit von einer Vorgabe auf Basis einer Leistung aufweist, die seitens des Endgeräts (6) zur Versorgung des Datenträgers (1) tatsächlich oder voraussichtlich vorgesehen ist, **dadurch gekennzeichnet, dass** im Datenträger (1) ein Startwert für die Einstellung der Leistungsaufnahme des Datenträgers (1) gespeichert ist, der bis zu einer anderweitigen Festlegung der Leistungsaufnahme als Vorgabe herangezogen wird und der Startwert dem kleinsten anwendungsspezifischen Wert für die Leistungsaufnahme entspricht.

2. Datenträger nach Anspruch 1, **dadurch gekennzeichnet, dass** der Datenträger (1) für die Ausführung mehrerer Anwendungen ausgebildet ist und für wenigstens einige dieser Anwendungen jeweils ein anwendungsspezifischer Wert für die Leistungsaufnahme des Datenträgers (1) als Vorgabe gespeichert ist.

3. Datenträger nach einem der vorhergehenden Ansprüche, **dadurch gekennzeichnet, dass** wenigstens eine Komponente (5) vorgesehen ist, die durch die Steuereinrichtung (9) und/oder durch das Steuerprogramm mit variabler Leistung betreibbar oder wahlweise zuschaltbar ist.

4. Datenträger nach einem der vorhergehenden Ansprüche, **dadurch gekennzeichnet, dass** die Taktfrequenz, mit der der integrierte Schaltkreis (4) betrieben wird, durch die Steuereinrichtung (9) und/ oder durch das Steuerprogramm variierbar ist.

5. Datenträger nach einem der vorhergehenden Ansprüche, **dadurch gekennzeichnet, dass** der Datenträger (1) als Chipkarte ausgebildet ist.

6. System bestehend aus wenigstens einem tragbaren Datenträger (1) und wenigstens einem Endgerät (6), wobei der Datenträger (1) für einen Betrieb mit unterschiedlicher Leistungsaufnahme ausgebildet ist und einen integrierten Schaltkreis (4) zur Speicherung und/oder Verarbeitung von Daten sowie eine Koppeleinrichtung (3) aufweist, über die der Datenträger vom Endgerät (6) mit elektrischer Energie versorgt werden kann und eine Datenübertragung abgewickelt werden kann, und wobei das Endgerät (6) in der Lage ist, den Datenträger (1) mit elektrischer Energie zu versorgen und mit dem Datenträger (1) zu kommunizieren und im Endgerät (6) eine Information über dessen maximal zulässige Leistungsabgabe an den Datenträger (1) gespeichert ist und der Datenträger (1) eine Steuereinrichtung (9) und/oder ein Steuerprogramm zur Einstellung der Leistungsaufnahme in Abhängigkeit von einer Vorgabe auf Basis der im Endgerät (6) gespeicherten Information aufweist, **dadurch gekennzeichnet, dass** im Datenträger (1) ein Startwert für die Einstellung der Leistungsaufnahme des Datenträgers (1) gespeichert ist, der bis zu einer anderweitigen Festlegung der Leistungsaufnahme als Vorgabe herangezogen wird, wobei der Startwert dem kleinsten anwendungsspezifischen Wert für die Leistungsaufnahme entspricht.

7. Verfahren zum Betreiben eines tragbaren Datenträgers (1), der einen integrierten Schaltkreis (4) zur Speicherung und/oder Verarbeitung von Daten aufweist, wobei der Datenträger (1) von einem Endgerät (6) mit elektrischer Energie versorgt wird und eine Datenübertragung zwischen dem Endgerät (6) und dem Datenträger (1) durchgeführt wird und die Leistungsaufnahme des Datenträgers (1) in Abhängigkeit von einer Vorgabe eingestellt wird, die auf Basis einer seitens des Endgeräts (6) zur Versorgung des Datenträgers (1) tatsächlich oder voraussichtlich vorgesehenen Leistung bestimmt wird, **dadurch gekennzeichnet, dass** bis zur anderweitigen Festlegung als Vorgabe ein im Datenträger (1) gespeicherter Startwert für die Einstellung der Leistungsaufnahme des Datenträgers (1) herangezogen wird und dass der Startwert dem kleinsten anwendungsspezifischen Wert für die Leistungsaufnahme entspricht.

8. Verfahren nach Anspruch 7, **dadurch gekennzeichnet, dass** die Vorgabe durch die aktuell vom Datenträger (1) ausgeführte Anwendung bestimmt wird.

9. Verfahren nach einem der Ansprüche 7 oder 8, **dadurch gekennzeichnet, dass** die Vorgabe vom Endgerät (6) bestimmt wird.

10. Verfahren nach Anspruch 9, **dadurch gekennzeichnet, dass** der Datenträger (1) dem Endgerät (6) mitteilt, dass er seine Leistungsaufnahme variieren kann.

11. Verfahren nach Anspruch 10, **dadurch gekennzeichnet, dass** die Mitteilung im Anschluss an ein Rücksetzen des Datenträgers (1) durch das Endgerät (6) erfolgt.

12. Verfahren nach einem der Ansprüche 7 bis 11, **dadurch gekennzeichnet, dass** die Vorgabe abhängig von der aktuell vorliegenden Art der Datenübertragung zwischen dem Datenträger (1) und dem Endgerät (6) bestimmt wird.

13. Verfahren nach einem der Ansprüche 9 bis 12, **dadurch gekennzeichnet, dass** einer vom Endgerät (6) bestimmten Vorgabe Vorrang vor allen anderen Vorgaben eingeräumt wird.

14. Verfahren nach einem der Ansprüche 7 bis 13, **dadurch gekennzeichnet, dass** die Leistungsaufnahme des Datenträgers (1) mit Hilfe des Betriebssystems eingestellt wird.

15. Verfahren nach einem der Ansprüche 7 bis 14, **dadurch gekennzeichnet, dass** die Leistungsaufnahme des Datenträgers (1) über die Taktfrequenz eingestellt wird, mit der der Datenträger (1) betrieben wird.

16. Verfahren nach einem der Ansprüche 7 bis 15, **dadurch gekennzeichnet, dass** die Leistungsaufnahme des Datenträgers (1) durch Variieren der Energiezufuhr zu wenigstens einer Komponente (5) des Datenträgers (1) eingestellt wird.

17. Verfahren nach einem der Ansprüche 7 bis 16, **dadurch gekennzeichnet, dass** die Leistungsaufnahme des Datenträgers (1) durch Ein- oder Ausschalten wenigstens einer Komponente (5) des Datenträgers (1) eingestellt wird.

## Claims

1. A portable data carrier having an integrated circuit (4) for storing and/or processing data and a coupling device (3) via which the data carrier can be supplied with electrical energy by a terminal (6) and a data transfer can be conducted, wherein the data carrier (1) is configured for operation with varying power input and the data carrier (1) has a control device (9) and/or a control program for adjusting the power input in accordance with a default on the basis of a power which is actually or likely provided for supplying the data carrier (1) on the part of the terminal (6), **characterized in that** in the data carrier (1) there is stored an initial value for the adjustment of the power input of the data carrier (1) which is used as the default until the power input is otherwise specified, and the initial value corresponds to the smallest application-specific value of the power input.

2. The data carrier according to claim 1, **characterized in that** the data carrier (1) is configured for executing a plurality of applications, and for at least some of said applications there is stored as the default in each case an application-specific value of the power input of the data carrier (1).

3. The data carrier according to either of the previous claims, **characterized in that** at least one component (5) is provided which, through the control device (9) and/or through the control program, is operable with variable power or optionally connectable.

4. The data carrier according to any of the previous claims, **characterized in that** the clock frequency at which the integrated circuit (4) is operated can be varied through the control device (9) and/or through the control program.

5. The data carrier according to any of the previous claims, **characterized in that** the data carrier (1) is configured as a chip card.

6. A system consisting of at least one portable data carrier (1) and at least one terminal (6), wherein the data carrier (1) is configured for operation with varying power input and has an integrated circuit (4) for storing and/or processing data as well as a coupling device (3) via which the data carrier can be supplied with electrical energy by the terminal (6) and a data transfer can be conducted, and wherein the terminal (6) is able to supply the data carrier (1) with electrical energy and to communicate with the data carrier (1) and in the terminal (6) there is stored information about its maximum permissible power output to the data carrier (1) and the data carrier (1) has a control device (9) and/or a control program for adjusting the power input in accordance with a default on the basis of the information stored in the terminal (6), **characterized in that** in the data carrier (1) there is stored an initial value for the adjustment of the power input of the data carrier (1) which is used as the default until the power input is otherwise specified, wherein the initial value corresponds to the smallest application-specific value of the power input.

7. A method for operating a portable data carrier (1) which has an integrated circuit (4) for storing and/or processing data, wherein the data carrier (1) is supplied with electrical energy by a terminal (6) and a data transfer between the terminal (6) and the data carrier (1) is carried out and the power input of the data carrier (1) is adjusted in accordance with a default which is determined on the basis of a power actually or likely provided for supplying the data carrier (1) on the part of the terminal (6), **characterized in that**, until otherwise specified, there is used as the default an initial value stored in the data carrier (1) for the adjustment of the power input of the data carrier (1), and the initial value corresponds to the smallest application-specific value of the power input.

8. The method according to claim 7, **characterized in that** the default is determined by the application currently executed by the data carrier (1).

9. The method according to either of claims 7 and 8, **characterized in that** the default is determined by the terminal (6).

10. The method according to claim 9, **characterized in that** the data carrier (1) communicates to the terminal (6) that said data carrier can vary its power input.

11. The method according to claim 10, **characterized in that** the communication is effected subsequent to a reset of the data carrier (1) through the terminal (6).

12. The method according to any of claims 7 to 11, **characterized in that** the default is determined in accordance with the currently present type of data transfer between the data carrier (1) and the terminal (6).

13. The method according to any of claims 9 to 12, **characterized in that** a default determined by the terminal (6) is granted priority over all other defaults.

14. The method according to any of claims 7 to 13, **characterized in that** the power input of the data carrier (1) is adjusted with the help of the operating system.

15. The method according to any of claims 7 to 14, **characterized in that** the power input of the data carrier (1) is adjusted via the clock frequency at which the data carrier (1) is operated.

16. The method according to any of claims 7 to 15, **characterized in that** the power input of the data carrier (1) is adjusted by varying the energy supply to at least one component (5) of the data carrier (1).

17. The method according to any of claims 7 to 16, **characterized in that** the power input of the data carrier (1) is adjusted by switching on or off at least one component (5) of the data carrier (1).

## Revendications

1. Support de données portable comportant un circuit intégré (4) pour la mémorisation et/ou le traitement de données et un dispositif de couplage (3) par lequel le support de données peut être alimenté en énergie électrique par un terminal (6) et une transmission de données peut être effectuée, le support de données (1) étant réalisé pour un fonctionnement à absorption variable de puissance et le support de données (1) comportant un dispositif de commande (9) et/ou un programme de commande pour le réglage de l'absorption de puissance en fonction d'une spécification sur la base d'une puissance qui est prévue réellement ou prévisionnellement par le terminal (6) pour l'alimentation du support de données (1), **caractérisé en ce qu'**une valeur initiale pour le réglage de l'absorption de puissance du support de données (1) est mémorisée dans le support de données (1), laquelle valeur initiale est adoptée en tant que spécification jusqu' à une autre détermination de l'absorption de puissance, et **en ce que** la valeur initiale correspond à la plus faible valeur spécifique d'application pour l'absorption de puissance.

2. Support de données selon la revendication 1, **caractérisé en ce que** le support de données (1) est réalisé pour l'exécution de plusieurs applications et **en ce que**, pour au moins quelques unes de ces applications, une valeur spécifique d'application pour l'absorption de puissance du support de données (1) est respectivement mémorisée en tant que spécification.

3. Support de données selon une des revendications précédentes, **caractérisé en ce qu'**au moins un composant (5) est prévu, qui, par l'agissement du dispositif de commande (9) et/ou du programme de commande, peut fonctionner à puissance variable ou être au choix connecté.

4. Support de données selon une des revendications précédentes, **caractérisé en ce que** la fréquence d'horloge à laquelle le circuit intégré (4) est exploité peut être modifiée par le dispositif de commande (9) et/ou le programme de commande.

5. Support de données selon une des revendications précédentes, **caractérisé en ce que** le support de données (1) est réalisé sous forme de carte à puce.

6. Système consistant en au moins un support de données (1) portable et au moins un terminal (6), le support de données (1) étant réalisé pour un fonctionnement à absorption variable de puissance et comportant un circuit intégré (4) pour la mémorisation et/ou le traitement de données ainsi qu'un dispositif de couplage (3) par lequel le support de données peut être alimenté en énergie électrique par le terminal (6) et une transmission de données peut être effectuée, et le terminal (6) étant en mesure d'alimenter en énergie électrique le support de données (1) et de communiquer avec le support de données (1) et une information sur sa puissance maximum admissible fournie au support de données (1) étant mémorisée dans le terminal (6) et le support de données (1) comportant un dispositif de commande (9) et/ou un programme de commande pour le réglage de l'absorption de puissance en fonction d'une spécification sur la base de l'information mémorisée dans le terminal (6), **caractérisé en ce qu'**une valeur initiale pour le réglage de l'absorption de puissance du support de données (1) est mémorisée dans le support de données (1), laquelle valeur initiale est adoptée en tant que spécification jusqu'à une autre détermination de l'absorption de puissance, la valeur initiale correspondant à la plus faible valeur spécifique d'application pour l'absorption de puissance.

7. Procédé d'exploitation d'un support de données (1) portable qui comporte un circuit intégré (4) pour la mémorisation et/ou le traitement de données, le support de données (1) étant alimenté en énergie électrique par un terminal (6) et une transmission de données étant effectuée entre le terminal (6) et le support de données (1) et l'absorption de puissance du support de données (1) étant réglée en fonction d'une spécification qui est déterminée sur la base d'une puissance prévue réellement ou prévisionnellement par le terminal (6) pour l'alimentation du support de données (1), **caractérisé en ce qu'**une valeur initiale mémorisée dans le support de données (1) est adoptée en tant que spécification jusqu'à une autre détermination, et **en ce que** la valeur initiale correspond à la plus faible valeur spécifique d'application pour l'absorption de puissance.

8. Procédé selon la revendication 7, **caractérisé en ce que** la spécification est déterminée par l'application actuellement effectuée par le support de données (1).

9. Procédé selon une des revendications 7 ou 8, **caractérisé en ce que** la spécification est déterminée par le terminal (6).

10. Procédé selon la revendication 9, **caractérisé en ce que** le support de données (1) signale au terminal (6) qu'il peut varier son absorption de puissance.

11. Procédé selon la revendication 10, **caractérisé en ce que** le signalement a lieu à la suite d'une réinitialisation du support de données (1) par le terminal (6).

12. Procédé selon une des revendications de 7 à 11, **caractérisé en ce que** la spécification est déterminée en fonction du type actuel de transmission de données entre le support de données (1) et le terminal (6).

13. Procédé selon une des revendications de 9 à 12, **caractérisé en ce que** la priorité est accordée à une spécification déterminée par le terminal (6), avant toute autre spécification.

14. Procédé selon une des revendications de 7 à 13, **caractérisé en ce que** l'absorption de puissance du support de données (1) est réglée à l'aide du système d'exploitation.

15. Procédé selon une des revendications de 7 à 14, **caractérisé en ce que** l'absorption de puissance du support de données (1) est réglée par l'intermédiaire de la fréquence d'horloge à laquelle le support de données (1) est exploité.

16. Procédé selon une des revendications de 7 à 15, **caractérisé en ce que** l'absorption de puissance du support de données (1) est réglée par variation de l'apport d'énergie à au moins un composant (5) du support de données (1).

17. Procédé selon une des revendications de 7 à 16, **caractérisé en ce que** l'absorption de puissance du support de données (1) est réglée par commutation ou décommutation d'au moins un composant (5) du support de données (1).
